(19) Europäisches Patentamt European Patent Office Office européen des brevets

(11) **EP 4 716 374 A1**

(12) **EUROPEAN PATENT APPLICATION**
published in accordance with Art. 153(4) EPC

(43) Date of publication:
**25.03.2026 Bulletin 2026/13**

(21) Application number: **23953387.0**

(22) Date of filing: **26.09.2023**

(51) International Patent Classification (IPC):
**H05B 47/155** (2020.01)    **B60Q 3/80** (2017.01)

(52) Cooperative Patent Classification (CPC):
**B60Q 3/80; H05B 47/155**

(86) International application number:
**PCT/CN2023/121488**

(87) International publication number:
**WO 2025/065226 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Shenzhen Yinwang Intelligent Technologies Co., Ltd.**
**Shenzhen, Guangdong 518110 (CN)**

(72) Inventors:
• **LI, Huayu**
  **Shenzhen, Guangdong 518129 (CN)**
• **ZHOU, Jin**
  **Shenzhen, Guangdong 518129 (CN)**

(74) Representative: **Körber, Martin Hans**
**Mitscherlich PartmbB**
**Karlstraße 7**
**80333 München (DE)**

(54) **CONTROL METHOD AND APPARATUS**

(57) This application relates to a control method and apparatus. The method is applied to a vehicle including a plurality of lighting devices, and the plurality of lighting devices are disposed at different positions of the vehicle. In the method, a plurality of lighting device groups may be determined. Each of the plurality of lighting device groups includes one or more of the plurality of lighting devices, and different lighting device groups in the plurality of lighting device groups include different lighting devices. Therefore, the plurality of lighting device groups may be controlled, based on light turn-on strategy information of the plurality of lighting device groups, to emit light. In this way, intelligence of a lighting system in the vehicle can be improved, enhancing user experience. In addition, the light turn-on strategy information of the plurality of lighting device groups may be used to determine a first position of a to-be-detected object. This can implement positioning through a lighting device group that emits light, thereby reducing positioning costs, protecting user privacy, and enhancing a user's sense of security.

Determine a plurality of lighting device groups, where each of the plurality of lighting device groups includes one or more of a plurality of lighting devices, and different lighting device groups in the plurality of lighting device groups include different lighting devices — 201

Control, based on light turn-on strategy information of the plurality of lighting device groups, the plurality of lighting device groups to emit light, where the light turn-on strategy information of the plurality of lighting device groups is used to determine a first position of a to-be-detected object — 202

FIG. 2

EP 4 716 374 A1

**Description**

**TECHNICAL FIELD**

This application relates to the field of vehicles, and in particular, to a control method and apparatus.

**BACKGROUND**

An ambient light of a vehicle not only enhances the aesthetic appeal of an interior of the vehicle, but also provides a sense of comfort. In recent years, as a product for decorating the vehicle and improving the mood, the ambient light has been increasingly adopted in mid-range models after its initial popularity in high-end vehicles.

However, currently, the ambient light in the vehicle primarily serves as the product for decorating the vehicle to enhance the vehicle ambience, its functionality remains quite limited, offering users a rather simplistic experience.

**SUMMARY**

This application provides a control method and apparatus, to improve intelligence of a lighting system in a vehicle, enhancing user experience.

According to a first aspect, a control method is provided. The method is applied to a vehicle including a plurality of lighting devices, and the plurality of lighting devices are disposed at different positions of the vehicle. In the method, a plurality of lighting device groups may be determined. Each of the plurality of lighting device groups includes one or more of the plurality of lighting devices, and different lighting device groups in the plurality of lighting device groups include different lighting devices. Therefore, the plurality of lighting device groups may be controlled, based on light turn-on strategy information of the plurality of lighting device groups, to emit light. In this way, intelligence of a lighting system in the vehicle can be improved, enhancing user experience. In addition, the light turn-on strategy information of the plurality of lighting device groups may be used to determine the first position of the to-be-detected object. This can implement positioning through a lighting device group that emits light, thereby reducing positioning costs, protecting user privacy, and enhancing a user's sense of security.

With reference to the first aspect, optionally, the determining the plurality of lighting device groups includes: determining a first lighting device group in the plurality of lighting device groups, where there is a position offset between the first lighting device group and a lighting device group other than the first lighting device group in the plurality of lighting device groups. In this way, the lighting device group that emits light can be accurately obtained. This can implement positioning through the lighting device group that emits light, thereby reducing positioning costs, protecting user privacy, and enhancing a user's sense of security.

With reference to the first aspect, optionally, the plurality of lighting device groups include the first lighting device group, a second lighting device group, and a third lighting device group, and a position offset between the first lighting device group and the second lighting device group is the same as a position offset between the second lighting device group and the third lighting device group. In this way, when positioning is implemented through a lighting device group that emits light, a relative spatial change may be obtained, and the relative spatial change is equivalent to a relative spatial change of different images captured by a binocular camera for the to-be-detected object. In other words, by setting such a position offset, the depth information of the to-be-detected object can be more accurately determined, improving positioning accuracy.

With reference to the first aspect, optionally, the light turn-on strategy information of the plurality of lighting device groups includes an ascending order of a plurality of position offsets; or the light turn-on strategy information of the plurality of lighting device groups includes a descending order of a plurality of position offsets. The plurality of position offsets include a position offset of each of the plurality of lighting device groups relative to the first lighting device group. In this way, the lighting device group that emits light can be accurately obtained. This can implement positioning through the lighting device group that emits light, thereby reducing positioning costs, protecting user privacy, and enhancing a user's sense of security. In addition, positioning is implemented based on different lighting device groups that emit light, so that depth information of the to-be-detected object can be more accurately determined, improving positioning accuracy.

With reference to the first aspect, optionally, there is a spacing between different lighting devices included in a same lighting device group in the plurality of lighting device groups. In this way, a lighting device that emits light in a lighting device group may be accurately obtained, so that positioning may be implemented through the lighting device that emits light.

With reference to the first aspect, optionally, the method further includes: determining, based on a second position of the to-be-detected object, an area in which the to-be-detected object is located. The area in which the to-be-detected object is located is a left area of the vehicle, and each of the plurality of lighting device groups includes a lighting device disposed in the left area of the vehicle; or the area in which the to-be-detected object is located is a right area of the vehicle, and each of the plurality of lighting device groups includes a lighting device disposed in the right area of the vehicle; or the area in which the to-be-detected object is located includes the left area of the vehicle and the right area of the vehicle, and each of the plurality of lighting device groups includes a lighting device disposed in the left area of the vehicle and/or a lighting device disposed in the right area of the vehicle.

With reference to the first aspect, optionally, the determining the first lighting device group in the plurality of lighting device groups includes: determining the first lighting device group based on the second position of the to-be-detected object.

With reference to the first aspect, optionally, a distance between a position of the first lighting device group in the vehicle and the second position of the to-be-detected object is less than or equal to a preset distance.

With reference to the first aspect, optionally, the vehicle is further provided with a visual sensor, and the method may further include: obtaining a plurality of images from a visual sensor when controlling each of the plurality of lighting device groups to emit light, where each of the plurality of images includes a lighting device group that is in the plurality of lighting device groups and that is in a light emitting state and the to-be-detected object, so that the first position of the to-be-detected object may be determined based on the plurality of images and a position, in the vehicle, of the lighting device group that is included in each of the plurality of images and that is in the light emitting state. This can implement positioning through the lighting device group that emits light, thereby reducing positioning costs, protecting user privacy, and enhancing a user's sense of security.

With reference to the first aspect, optionally, that each of the plurality of images includes the lighting device group that is in the plurality of lighting device groups and that is in the light emitting state and the to-be-detected object includes: Each of the plurality of images indicates positions, in the image, of the lighting device group that is in the plurality of lighting device groups and that is in the light emitting state and the to-be-detected object.

According to a second aspect, a control method is provided. The method is applied to a vehicle including a plurality of lighting devices, and the plurality of lighting devices are disposed at different positions of the vehicle. In the method, first information from a terminal device may be received. The first information indicates to turn on a first lighting device group, a distance between the first lighting device group and a to-be-detected object in the vehicle is less than or equal to a preset distance, and the to-be-detected object is at a first position, so that the first lighting device group can be controlled, in response to the first information, to emit light. Further, second information from the terminal device may be further received. The second information indicates to turn on a second lighting device group, the to-be-detected object moves from the first position to a second position, and a distance between the second lighting device group and the to-be-detected object is less than or equal to the preset distance, so that the second lighting device group can be controlled, in response to the second information, to emit light. In this way, a lighting device is remotely controlled based on an instruction of the terminal device, effective interaction between the lighting device and the user is increased, and intelligence of a lighting system in the vehicle is improved, enhancing user experience.

With reference to the second aspect, optionally, the vehicle is further provided with a visual sensor, and the method further includes: sending third information to the terminal device. The third information includes a first image from the visual sensor, and the first image includes the to-be-detected object and a first lighting device group; or the third information indicates a first recommendation list, and the first recommendation list includes a first lighting device group.

With reference to the second aspect, optionally, the sending the third information to the terminal device includes: sending the third information to the terminal device when at least one of shutting down of an engine of the vehicle, powering off of the entire vehicle, locking of a vehicle door, and turning off of an air conditioner is detected.

With reference to the second aspect, optionally, the method further includes: sending fourth information to the terminal device. The fourth information includes a second image from the visual sensor, and the second image includes the to-be-detected object and a second lighting device group; or the fourth information indicates a second recommendation list, and the second recommendation list includes a second lighting device group.

According to a third aspect, a control apparatus is provided, including units or modules configured to implement the method according to any one of the implementations of the first aspect or the second aspect. The control apparatus may be a vehicle-mounted terminal, or may be a module (for example, a processor, a chip, or a chip system) of a vehicle-mounted terminal, or may be a logical node, a logical module, or software that can implement all or some functions of a vehicle-mounted terminal.

According to a fourth aspect, a control apparatus is provided, including at least one processor. The at least one processor is configured to perform the method according to any one of the implementations of the first aspect and the second aspect. The control apparatus may be a vehicle-mounted terminal, or may be a module (for example, a processor, a chip, or a chip system) of a vehicle-mounted terminal, or may be a logical node, a logical module, or software that can implement all or some functions of a vehicle-mounted terminal. The at least one processor may execute a computer program or instructions in a memory, so that the foregoing method is performed. The memory may be included in the control apparatus, or may be located outside the control apparatus. In addition, the control apparatus may further include an interface.

According to a fifth aspect, a vehicle is provided, including the control apparatus according to the third aspect or the fourth aspect.

According to a sixth aspect, a computer-readable storage medium is provided. The computer-readable storage medium stores computer instructions. When the computer instructions are executed, a computer is enabled to perform the method according to any one of the implementations of the first aspect and the second aspect.

According to a seventh aspect, a computer program product is provided. The computer program product includes computer program code. When the computer program code is run by a computer, the computer is enabled to perform the method according to any one of the implementations of the first aspect and the second aspect.

**BRIEF DESCRIPTION OF DRAWINGS**

FIG. 1 is a diagram of a structure of a control system according to an embodiment of this application;
FIG. 2 is a schematic flowchart of a control method according to an embodiment of this application;
FIG. 3 is a diagram of a position relationship between a lighting device group and a to-be-detected object according to an embodiment of this application;
FIG. 4 is a diagram of division of an in-vehicle area according to an embodiment of this application;
FIG. 5 is a schematic flowchart of another control method according to an embodiment of this application;
FIG. 6 is a diagram of a structure of a control apparatus 60 according to an embodiment of this application;
FIG. 7 is a diagram of a structure of a vehicle 70 according to an embodiment of this application; and
FIG. 8 is a diagram of a structure of a control apparatus 80 according to an embodiment of this application.

**DESCRIPTION OF EMBODIMENTS**

An ambient light of a vehicle not only enhances the aesthetic appeal of an interior of the vehicle, but also provides a sense of comfort. However, currently, the ambient light in the vehicle primarily serves as the product for decorating the vehicle to enhance the vehicle ambience, its functionality remains quite limited, offering users a rather simplistic experience. In view of this, this application provides a control method, to resolve this problem.

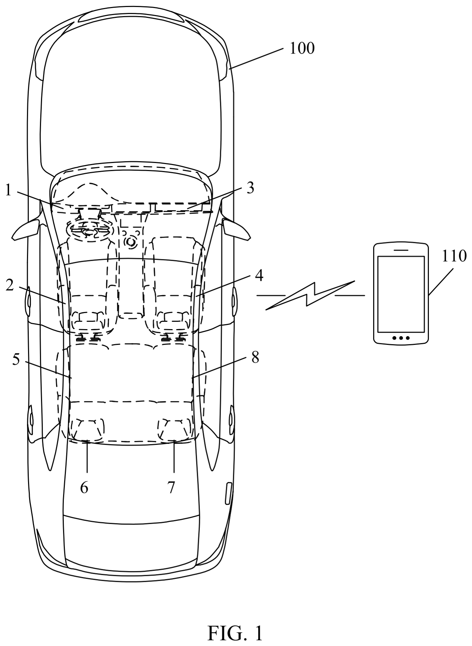

The following describes a system architecture in embodiments of this application. FIG. 1 is a diagram of a structure of a control system according to an embodiment of this application. As shown in FIG. 1, the control system may include a vehicle 100. The vehicle 100 may be any vehicle that is applicable to embodiments of this application, for example, a car, a truck, a bus, a passenger vehicle, a high-speed railway, or a subway. It should be understood that any vehicle having a cockpit may be considered as the vehicle 100.

The vehicle 100 may include a lighting device 101 and a vehicle-mounted terminal 102.

The lighting device 101 may be one or more lighting units, and the lighting unit may be a minimum granularity unit for emitting light. For example, the lighting unit may be a light bead. It should be noted that a shape, a structure, a type, and the like of the lighting device are not limited in this application. There may be a plurality of lighting devices 101. These lighting devices (not shown in FIG. 1) may be deployed at different positions in a cockpit of the vehicle 100. For example, lighting devices may be deployed at positions 1 to 8 shown in FIG. 1. It should be noted that an installation position of the lighting device is not limited in this application.

Optionally, the lighting device 101 may belong to a lighting device group, and there may be one or more lighting devices in the lighting device group. This is not limited herein. A representation form of the lighting device group is usually a light strip, a light array, and the like. For example, when the representation form of the lighting device group is a light strip, the lighting device group may be located in a same light strip or different light strips, and different lighting device groups may be located in a same light strip or different light strips. For another example, when the representation form of the lighting device group is a light array, the lighting device group may be located in a same light array or different light arrays, and different lighting device groups may be located in a same light array or different light arrays.

The vehicle-mounted terminal 102 is an electronic device having a data processing capability and/or data receiving and sending capabilities. The vehicle-mounted terminal 102 may further control a light emitting manner of the lighting device, for example, at least one of light emitting brightness, a light emitting color, and light emitting duration. Optionally, light emitting manners of different lighting device groups may be the same or different, and light emitting manners of different lighting devices included in a same lighting device group may be the same or different. The light emitting manner of the lighting device is not limited in this application, and a light emitting sequence of different lighting devices in the lighting device group is not limited either.

Optionally, the vehicle 100 may further include a visual sensor 103. The visual sensor 103 may capture one or more images of an ambient environment of the vehicle. For example, the visual sensor 103 may detect and capture one or more of the face, the head, a part of a trunk (for example, an arm), and the like of a user in the vehicle. The visual sensor 103 may be one or more of a monocular camera, a binocular camera, a time of flight (time of flight, TOF) camera, a driver monitoring system (driver monitoring system, DMS) camera, a vehicle camera-monitor system (camera-monitor system, CMS) camera, or the like. It should be understood that the visual sensor 103 may be disposed on the vehicle 100 based on a requirement, for example, may be disposed in a steering wheel or an area (not shown in FIG. 1) near a center console. There may be one or more visual sensors 103, and positions and a quantity of visual sensors 103 are not limited in this application.

It should be noted that there are communication links between the vehicle-mounted terminal 102 and the lighting device 101, the visual sensor 103, and the like. The communication link herein may be specifically a wired link, a wireless link, a combination of a wired link and a wireless link, or the like. The wired link, for example, may be an Ethernet-based bus, or may be one or more of a controller area network (controller area network, CAN) bus, a local interconnect network (local interconnect network, LIN) bus, a media oriented system transport (media oriented system transport, MOST) bus, a FlexRay, and the like. The wireless link, for example, is a short-range connection technology, including an ultra-wideband (ultra-wideband, UWB) communication technology, a wireless local area network (wireless local area network, WLAN) technology, Bluetooth (Bluetooth), Zigbee (Zigbee), a vehicle-mounted short-range wireless communication technology, and a SparkLink (SparkLink) federation communication technology, and for another example, may be a long-range connection technology, including a long term evolution (long term evolution, LTE)-based communication technology, a 5th generation mobile communication technology (5th generation mobile networks or 5th generation wireless systems, 5th-Generation, 5G), and a vehicle-mounted wireless communication technology. Certainly, it is not excluded that there is another technology that may be used to support the vehicle-mounted terminal 102 in communicating with the lighting device 101, the visual sensor 103, and the like.

Optionally, the control system may further include a terminal device 110. The terminal device 110 is an electronic device having a data processing capability and/or data receiving and sending capabilities. For example, the terminal device 110 may indicate, to the vehicle 100, a lighting device group that needs to be turned on. The terminal device 110 may be a mobile phone, a tablet computer, a palmtop computer, a wearable device (which may also be referred to as a wearable intelligent device), a virtual reality (virtual reality, VR) terminal, an augmented reality (augmented reality, AR) terminal, or the like. A device form of the terminal device is not limited in this application. It should be understood that a data link for receiving and sending information between the vehicle 100 and the terminal device 110 may include various types of connection media, and may be specifically a wired link (for example, an optical fiber), a wireless link, a combination of a wired link and a wireless link, or the like.

It should be noted that the system architecture shown in FIG. 1 is merely an example, and does not constitute a limitation on the technical solutions provided in this application. For example, embodiments of this application may be further applicable to another application scenario of the lighting device, for example, an indoor scenario like an office place, a home place, or an entertainment place, or an outdoor scenario like a field gathering.

The following describes in detail a control method provided in embodiments of this application with reference to FIG. 1.

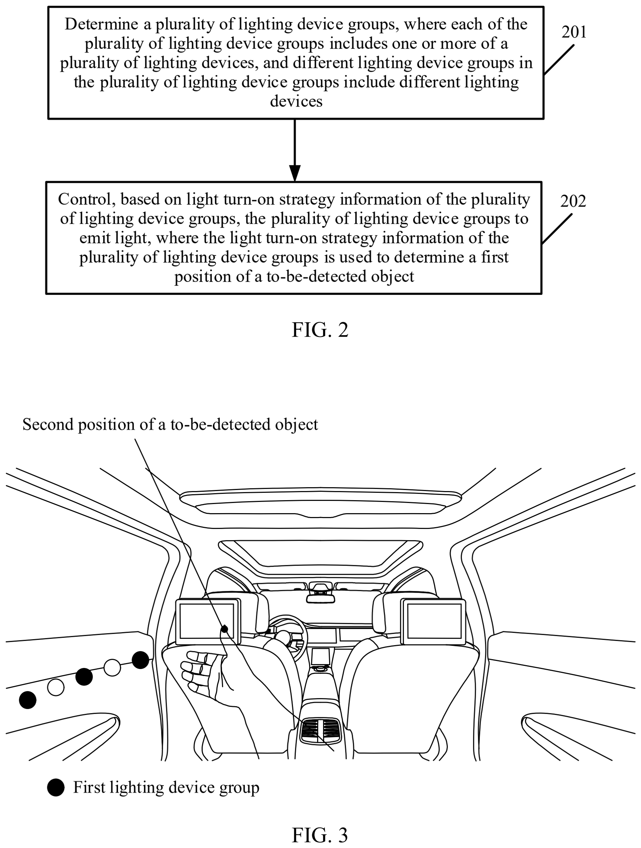

FIG. 2 is a schematic flowchart of a control method according to an embodiment of this application. The method is applied to a vehicle including a plurality of lighting devices, and the plurality of lighting devices are disposed at different positions of the vehicle. The method includes but is not limited to the following steps.

201: A vehicle-mounted terminal determines a plurality of lighting device groups, where each of the plurality of lighting device groups includes one or more of the plurality of lighting devices, and different lighting device groups in the plurality of lighting device groups include different lighting devices.

Optionally, step 201 may include: The vehicle-mounted terminal determines a first lighting device group in the plurality of lighting device groups, where there is a position offset between the first lighting device group and a lighting device group other than the first lighting device group in the plurality of lighting device groups. In this way, a lighting device group that emits light can be accurately obtained. This can implement positioning through the lighting device group that emits light, thereby reducing positioning costs, protecting user privacy, and enhancing a user's sense of security.

The vehicle-mounted terminal may determine the first lighting device group in the plurality of lighting device groups in the following implementation. Detailed descriptions are as follows.

1. The vehicle-mounted terminal determines the first lighting device group based on a second position of a to-be-detected object.

The to-be-detected object may be a user in the vehicle, for example, a driver, a non-driver, or an animal. The to-be-detected object may alternatively be a leftover object of a user in the vehicle, for example, a wallet or a mobile phone. This is not limited herein. Optionally, when the to-be-detected object is the user in the vehicle, a position (for example, the second position) of the to-be-detected object may be a position of a key point of the to-be-detected object. The key point may include a face key point and/or a human body key point. The face key point is used to determine a position of a key area of the face in a face image, and the key area of the face includes one or more of an eyebrow, an eye, the nose, the mouth, a facial contour, and the like. The human body key point may be used to determine a position of a key area of a trunk, and the position of the key area of the trunk includes one or more of a joint point, a skeletal point, and the like.

Optionally, the vehicle-mounted terminal may determine the second position of the to-be-detected object based on an image captured by a visual sensor disposed in the vehicle. The second position of the to-be-detected object may be depth information, namely, three-dimensional coordinate information, of the to-be-detected object. The depth information is also referred to as a depth. For ease of calculation, in the field of machine vision, the depth is a distance from each point in space relative to the visual sensor. In this embodiment of this application, the second position of the to-be-detected object is a distance from three-dimensional coordinates of the to-be-detected object in a world coordinate system to the visual sensor. The world coordinate system, also referred to as a measurement coordinate system, is a three-dimensional coordinate system. For example, the three-dimensional coordinate system may be a three-dimensional orthogonal coordinate system, a column coordinate system, or a spherical coordinate system. In this embodiment of this application, a three-dimensional orthogonal coordinate system (Xw, Yw, Zw) may be used as the world coordinate system. A position of the world coordinate system may be determined based on an actual situation. In this application, for ease of processing, the vehicle is selected as the center of the world coordinate system (the vehicle is located at an origin position Ow of the world coordinate system), a Zw axis is perpendicular to the ground, an Xw axis represents a heading direction of the vehicle, and the coordinate system changes with movement of the vehicle. A unit of the world coordinate system may be meter (m).

A distance between a position of the first lighting device group in the vehicle and the second position of the to-be-detected object is less than or equal to a preset distance. To be specific, a distance between a position of each lighting device in the first lighting device group in the vehicle and the second position of the to-be-detected object is less than or equal to the preset distance. For example, it is assumed that the second position of the to-be-detected object is a thumb finger pulp of the user in the vehicle, and the first lighting device group includes three lighting devices, for example, black dots in FIG. 3. A distance between a position of each of the three lighting devices in the vehicle and the thumb finger pulp is less than or equal to the preset distance. It should be noted that a position of a lighting device in the vehicle mentioned in this application may be depth information of the lighting device. The depth information of the lighting device may be predefined or preconfigured on the vehicle, or the depth information of the lighting device may be obtained by the vehicle-mounted terminal from a cloud. This is not limited herein.

Optionally, the preset distance may be a value greater than 0. The preset distance may be predefined or preconfigured on the vehicle, or the preset distance may be obtained by the vehicle-mounted terminal from the cloud, or the like. This is not limited herein.

2. The vehicle-mounted terminal receives indication information from the cloud or a terminal device, where the indication information indicates the first lighting device group.

There may be one or more lighting device groups other than the first lighting device group in the plurality of lighting device groups. Position offsets of different lighting device groups in the plurality of other lighting device groups relative to the first lighting device group may be different. For example, it is assumed that there are N lighting device groups, where N is an integer greater than 1, and a total quantity of lighting devices in the vehicle is L. A 1st lighting device group includes a lighting device P1, a lighting device P2, a lighting device P3, and a lighting device P4. A position offset of a 2nd lighting device group relative to the 1st lighting device group is 100/L. To be specific, positions of four lighting devices included in the 2nd lighting device group in the vehicle are respectively a position of the lighting device P1 in the vehicle+100/L, a position of the lighting device P2 in the vehicle+100/L, a position of the lighting device P3 in the vehicle+100/L, and a position of the lighting device P4 in the vehicle+100/L. A position offset of a 3rd lighting device group relative to the 1st lighting device group is 100/L*2. To be specific, positions of four lighting devices included in the 3rd lighting device group in the vehicle are respectively a position of the lighting device P1 in the vehicle+100/L*2, a position of the lighting device P2 in the vehicle+100/L*2, a position of the lighting device P3 in the vehicle+100/L*2, and a position of the lighting device P4 in the vehicle+100/L*2. A position offset of an Nth lighting device group relative to the 1st lighting device group is 100/L*K. To be specific, positions of four lighting devices included in the 3rd lighting device group in the vehicle are respectively a position of the lighting device P1 in the vehicle+100/L*K, a position of the lighting device P2 in the vehicle+100/L*K, a position of the lighting device P3 in the vehicle+100/L*K, and a position of the lighting device P4 in the vehicle+100/L*K, where K=100/1*N% 100/L. It can be seen that, position offsets of the 2nd lighting device group to the Nth lighting device group relative to the 1st lighting device group are different.

It should be noted that a position offset mentioned in this application is an offset between a position of any lighting device in a lighting device group in the vehicle and a position of a corresponding lighting device in another lighting device group in the vehicle. For example, the position offset of the 2nd lighting device group relative to the 1st lighting device group is 100/L. Therefore, an offset between a position of any lighting device in the 2nd lighting device group in the vehicle and a position of a corresponding lighting device in the 1st lighting device group in the vehicle is also 100/L. In addition, the position of the lighting device in the vehicle mentioned in this application may be three-dimensional coordinates of the lighting device in the world coordinate system.

Optionally, different lighting device groups in the plurality of lighting device groups may have an association relationship. For example, the plurality of lighting device groups may include the first lighting device group, a second lighting device group, and a third lighting device group, and a position offset between the first lighting device group and the second lighting device group is the same as a position offset between the second lighting device group and the third lighting device group. In this way, when positioning is implemented through a lighting device group that emits light, a relative spatial change may be obtained, and the relative spatial change is equivalent to a relative spatial change of different images captured by a binocular camera for the to-be-detected object. In other words, by setting such a position offset, the depth information of the to-be-detected object can be more accurately determined, improving positioning accuracy.

Optionally, there is a spacing between different lighting devices included in a same lighting device group in the plurality of lighting device groups. For example, a spacing between different lighting devices included in a same lighting device group in the plurality of lighting device groups may be greater than or equal to a preset spacing. Optionally, the preset spacing may be a value greater than 0. The preset spacing may be predefined or preconfigured on the vehicle, or the preset spacing may be obtained by the vehicle-mounted terminal from the cloud, or the like. This is not limited herein. In this way, a lighting device that emits light in a lighting device group may be accurately obtained, so that positioning may be implemented through the lighting device that emits light.

Positions of the plurality of lighting device groups in the vehicle are related to the second position of the to-be-detected object. Detailed descriptions are as follows.

> 1. An area in which the to-be-detected object is located is a left area of the vehicle, and each of the plurality of lighting device groups includes a lighting device disposed in the left area of the vehicle.

Optionally, the area in which the to-be-detected object is located may be determined based on the second position of the to-be-detected object. The area in which the to-be-detected object is located may be a seat in the vehicle, for example, a driver seat, a front passenger seat, a second-row left seat, or a second-row right seat. Alternatively, the area in which the to-be-detected object is located may be a position range, and the position range includes the second position of the to-be-detected object. For example, a maximum value or a minimum value of the position range is the second position of the to-be-detected object, or a position in the position range is the second position of the to-be-detected object.

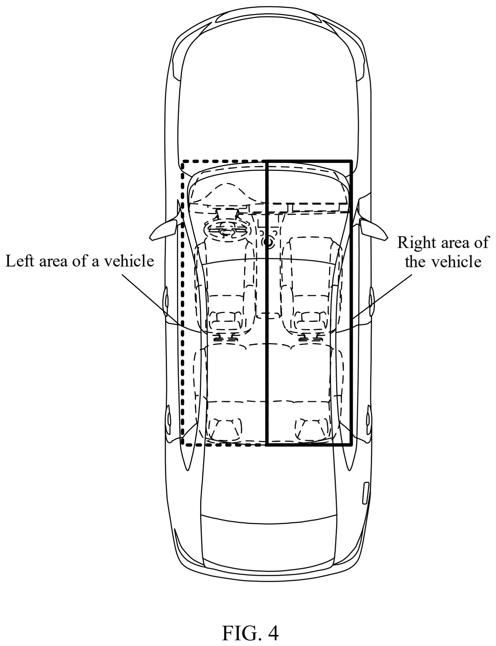

An in-vehicle area may be divided based on FIG. 4. It can be learned that the left area of the vehicle may include the driver seat and the second-row left seat, and the right area of the vehicle may include the front passenger seat and the second-row right seat. It may be understood that division of the in-vehicle area is merely an example, and area division of the vehicle is not limited in this application.

2. An area in which the to-be-detected object is located is a right area of the vehicle, and each of the plurality of lighting device groups includes a lighting device disposed in the right area of the vehicle.

3. An area in which the to-be-detected object is located includes the left area of the vehicle and the right area of the vehicle, and each of the plurality of lighting device groups includes a lighting device disposed in the left area of the vehicle and/or a lighting device disposed in the right area of the vehicle.

It should be noted that all lighting devices included in any one of the plurality of lighting device groups are lighting devices that are not blocked.

202: The vehicle-mounted terminal controls, based on light turn-on strategy information of the plurality of lighting device groups, the plurality of lighting device groups to emit light, where the light turn-on strategy information of the plurality of lighting device groups is used to determine a first position of the to-be-detected object.

Optionally, the light turn-on strategy information of the plurality of lighting device groups includes an ascending order of a plurality of position offsets; or the light turn-on strategy information of the plurality of lighting device groups includes a descending order of a plurality of position offsets. The plurality of position offsets include a position offset of each of the plurality of lighting device groups relative to the first lighting device group.

Optionally, the method may further include: The vehicle-mounted terminal obtains a plurality of images from a visual sensor when controlling each of the plurality of lighting device groups to emit light, where each of the plurality of images includes a lighting device group that is in the plurality of lighting device groups and that is in a light emitting state and the to-be-detected object, so that the first position of the to-be-detected object may be determined based on the plurality of images and a position, in the vehicle, of the lighting device group that is included in each of the plurality of images and that is in the light emitting state.

It is assumed that the plurality of lighting device groups may include the first lighting device group, the second lighting device group, and the third lighting device group. That the vehicle-mounted terminal obtains the plurality of images from the visual sensor when controlling each of the plurality of lighting device groups to emit light may be understood as: The vehicle-mounted terminal obtains a first image from the visual sensor when controlling the first lighting device group to emit light, where the first image includes the first lighting device group in a light emitting state and the to-be-detected object. The vehicle-mounted terminal obtains a second image from the visual sensor when controlling the second lighting device group to emit light, where the second image includes the second lighting device group in a light emitting state and the to-be-detected object. The vehicle-mounted terminal obtains a third image from the visual sensor when controlling the third lighting device group to emit light, where the third image includes the third lighting device group in a light emitting state and the to-be-detected object.

Optionally, that each of the plurality of images includes the lighting device group that is in the plurality of lighting device groups and that is in the light emitting state and the to-be-detected object may include: Each of the plurality of images indicates positions, in the image, of the lighting device group that is in the plurality of lighting device groups and that is in the light emitting state and the to-be-detected object. That is, each of the plurality of images indicates a position, in the image, of each lighting device included in the lighting device group that is in the plurality of lighting device groups and that is in the light emitting state and the position of the to-be-detected object. The position in the image may be two-dimensional coordinates on the image.

Optionally, determining the first position of the to-be-detected object based on the plurality of images and the position, in the vehicle, of the lighting device group that is included in each of the plurality of images and that is in the light emitting state may include: determining the first position of the to-be-detected object based on the plurality of images, the position, in the vehicle, of the lighting device group that is included in each of the plurality of images and that is in the light emitting state, and a parameter of the visual sensor. The parameter of the visual sensor includes an intrinsic parameter and/or an extrinsic parameter.

The intrinsic parameter is a parameter related to a feature of the visual sensor, for example, a focal length, a pixel size, and a lens distortion of the visual sensor, and is usually represented by an intrinsic parameter matrix and a distortion parameter of the visual sensor. The extrinsic parameter is a parameter of the visual sensor relative to another coordinate system (for example, the world coordinate system), for example, a position and a rotation direction of the visual sensor, and is usually represented by a rotation matrix and a translation vector of a camera coordinate system relative to the another coordinate system. The camera coordinate system uses an optical axis of a camera as a Zc axis. A center position of light in the camera optical system is an origin Oc, which is actually a center of a lens.

In this embodiment, the intrinsic parameter and the extrinsic parameter of the visual sensor may be obtained through calculation by using a camera calibration algorithm. The camera calibration algorithm belongs to a conventional technology. Details are not described herein.

The following describes how to determine the first position of the to-be-detected object by using an example. For example, the first lighting device group in the light emitting state in the first image includes two lighting devices: a lighting device 1 and a lighting device 2. Positions of the lighting device 1, the lighting device 2, and the to-be-detected object in the first image satisfy the following formula (1):

$$ s \begin{bmatrix} u \\ v \\ 1 \end{bmatrix} = \begin{bmatrix} f_x & 0 & u_0 \\ 0 & f_y & v_0 \\ 0 & 0 & 1 \end{bmatrix} \begin{bmatrix} R_{3\times3} & t_{3\times1} \end{bmatrix} \begin{bmatrix} X_W \\ Y_W \\ Z_W \\ 1 \end{bmatrix} \quad (1) $$

In the formula (1), s is an extrinsic parameter, $\begin{bmatrix} f_x & 0 & u_0 \\ 0 & f_y & v_0 \\ 0 & 0 & 1 \end{bmatrix}$ is an intrinsic parameter, $u$ and $v$ may be the position of the lighting device 1, the lighting device 2, or the to-be-detected object in the first image, namely, two-dimensional coordinates of the lighting device 1, the lighting device 2, or the to-be-detected object in the first image, and $X_W$, $Y_W$, and $Z_W$ may be coordinates of the lighting device 1, the lighting device 2, or the to-be-detected object in the world coordinate system. In this way, for the lighting device 1, the lighting device 2, and the to-be-detected object, three formulas similar to the formula (1) may be obtained.

It should be understood that formulas similar to the formula (1) may be obtained for a lighting device group that is included in any image in the plurality of images and that is in a light emitting state and the to-be-detected object. For ease of description, a formula corresponding to an image may be referred to as an equation set. In a possible implementation, the vehicle-mounted terminal device may separately perform least squares fitting on an equation set corresponding to each of the plurality of images, to obtain a plurality of third positions of the to-be-detected object. In other words, the vehicle-mounted terminal first determines the plurality of third positions of the to-be-detected object based on the plurality of images and the positions, in the vehicle, of the lighting device group that is included in each of the plurality of images and that is in the light emitting state, to determine the first position of the to-be-detected object based on the plurality of third positions of the to-be-detected object. For example, the first position of the to-be-detected object is a minimum value, a maximum value, or an average value of the plurality of third positions of the to-be-detected object; or the first position of the to-be-detected object is any position in the plurality of third positions of the detection point. In another possible implementation, the vehicle-mounted terminal device may perform least squares fitting on an equation set corresponding to each of the plurality of images, to obtain the first position of the to-be-detected object. For example, it is assumed that there are three images in total: an image 1 to an image 3, which respectively correspond to an equation set 1 to an equation set 3. The vehicle-mounted terminal may perform least squares fitting on the equation set 1 to the equation set 3, to obtain the first position of the to-be-detected object.

It can be learned that, in the foregoing embodiment, intelligence of a lighting system in the vehicle can be improved, enhancing user experience. In addition, the light turn-on strategy information of the plurality of lighting device groups may be used to determine the first position of the to-be-detected object. This can implement positioning through a lighting device group that emits light, thereby reducing positioning costs, protecting user privacy, and enhancing a user's sense of security.

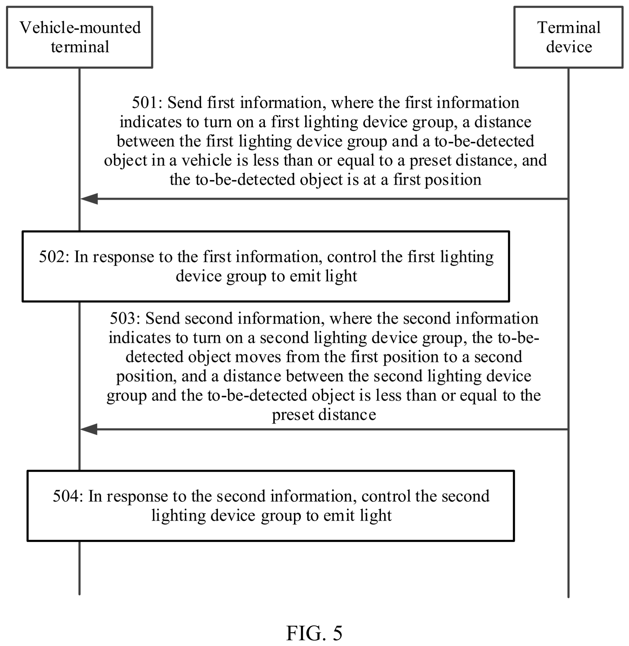

FIG. 5 is a schematic flowchart of another control method according to an embodiment of this application. The method is applied to a vehicle including a plurality of lighting devices, and the plurality of lighting devices are disposed at different positions of the vehicle. The method includes but is not limited to the following steps.

501: A terminal device sends first information to a vehicle-mounted terminal, where the first information indicates to turn on a first lighting device group, a distance between the first lighting device group and a to-be-detected object in the vehicle is less than or equal to a preset distance, and the to-be-detected object is at a first position.

Correspondingly, the vehicle-mounted terminal receives the first information from the terminal device. Optionally, before the vehicle-mounted terminal receives the first information from the terminal device, the method may further include: The vehicle-mounted terminal sends third information to the terminal device. For example, the vehicle-mounted terminal sends the third information to the terminal device when detecting at least one of shutting down of an engine of the vehicle, powering off of the entire vehicle, locking of a vehicle door, and turning off of an air conditioner. The third information includes a first image from a visual sensor, and the first image includes the to-be-detected object and a first lighting device group; or the third information indicates a first recommendation list, and the first recommendation list includes a first lighting device group.

Optionally, that the first information indicates to turn on the first lighting device group may be understood as that the first information indicates to turn on at least one lighting device in the first lighting device group.

It should be noted that one or more lighting devices may be included in a lighting device group in the embodiment shown in FIG. 5. This is not limited herein. Optionally, there may be a spacing between different lighting devices included in the lighting device group. For example, a spacing between different lighting devices included in the lighting device group may be greater than or equal to a preset spacing. Optionally, the preset spacing may be a value greater than 0. The preset spacing may be predefined or preconfigured on the vehicle, or the preset spacing may be obtained by the vehicle-mounted terminal from the cloud, or the like. This is not limited herein.

That a distance between a lighting device group (for example, the first lighting device group) and the to-be-detected object in the embodiment shown in FIG. 5 is less than or equal to a preset distance may be understood as: A distance between a position of each lighting device in the lighting device group in the vehicle and a position of the to-be-detected object in the vehicle is less than or equal to the preset distance. Optionally, the preset distance may be a value greater than 0. The preset distance may be predefined or preconfigured on the vehicle, or the preset distance may be obtained by the vehicle-mounted terminal from the cloud, or the like. This is not limited herein.

A position of the to-be-detected object, for example, the first position, may be implemented in the following manner. Detailed descriptions are as follows.

1. The vehicle-mounted terminal may determine the position of the to-be-detected object based on an image captured by the visual sensor.

2. The vehicle-mounted terminal may determine the position of the to-be-detected object through a pressure sensor under a seat. For example, when a pressure value detected by the pressure sensor on the seat is greater than or equal to a preset pressure value, it may be determined that the position of the to-be-detected object is at the seat. The preset pressure value may be a value greater than 0. The preset pressure value may be predefined or preconfigured on the vehicle, or the preset pressure value may be obtained by the vehicle-mounted terminal from the cloud, or the like. This is not limited herein.

3. The vehicle-mounted terminal may determine a position of a sound source based on audio information obtained by a microphone array, to determine the position of the to-be-detected object based on the position of the sound source. For example, if the position of the sound source is at the front passenger seat, the position of the to-be-detected object is at the front passenger seat.

502: In response to the first information, the vehicle-mounted terminal controls the first lighting device group to emit light. For example, at least one lighting device in the first lighting device group is controlled to emit light.

503: The terminal device sends second information to the vehicle-mounted terminal, where the second information indicates to turn on the second lighting device group, the to-be-detected object moves from the first position to the second position, and a distance between the second lighting device group and the to-be-detected object is less than or equal to the preset distance.

Correspondingly, the vehicle-mounted terminal receives the second information from the terminal device.

Optionally, before the vehicle-mounted terminal receives the second information from the terminal device, the method may further include: The vehicle-mounted terminal sends fourth information to the terminal device. The fourth information includes a second image from the visual sensor, and the second image includes the to-be-detected object and a second lighting device group; or the fourth information indicates a second recommendation list, and the second recommendation list includes a second lighting device group.

Optionally, that the second information indicates to turn on the second lighting device group may be understood as that the second information indicates to turn on at least one lighting device in the second lighting device group.

504: In response to the second information, the vehicle-mounted terminal controls the second lighting device group to emit light. For example, at least one lighting device in the second lighting device group is controlled to emit light.

It can be learned that, in the foregoing embodiment, a lighting device is remotely controlled based on an instruction of the terminal device, effective interaction between the lighting device and the user is increased, and intelligence of a lighting system in the vehicle is improved, enhancing user experience.

The methods in embodiments of this application are described in detail above, and apparatuses in embodiments of this application are provided below.

Embodiments of this application further provide an apparatus for implementing any one of the foregoing methods. For example, a control apparatus including units (or means) configured to implement steps performed by the vehicle-mounted terminal in any one of the foregoing methods is provided. For another example, a control apparatus is provided, and includes units (or means) configured to implement the steps performed by the terminal device in any one of the foregoing methods.

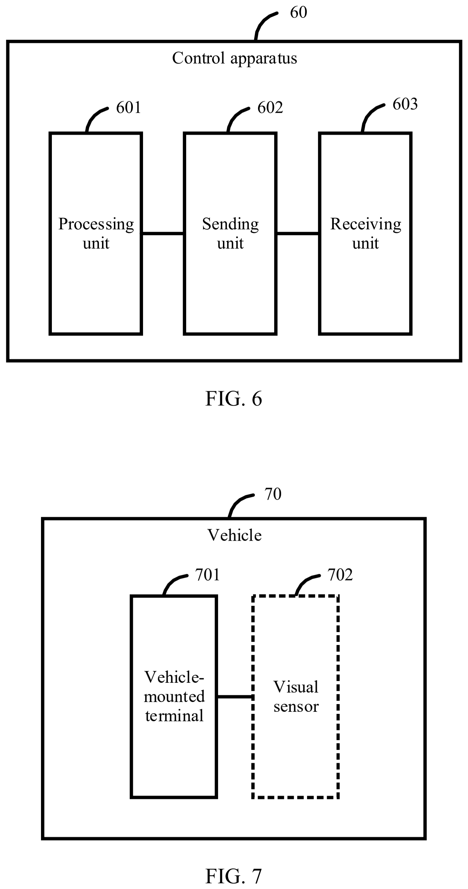

For example, FIG. 6 is a diagram of a structure of a control apparatus 60 according to an embodiment of this application. The control apparatus 60 includes a processing unit 601, a sending unit 602, and a receiving unit 603, to implement, for example, the control method in any embodiment shown in FIG. 2 or FIG. 5.

It should be understood that division into the units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the units in the apparatus may be implemented in a form of hardware circuit, and functions of some or all of the units may be implemented through design of the hardware circuit. The hardware circuit may be understood as one or more processors. For example, in an implementation, the hardware circuit is an application-specific integrated circuit (application-specific integrated circuit, ASIC), and the functions of some or all of the units are implemented through design of a logical relationship between elements in the circuit. For another example, in another implementation, the hardware circuit may be implemented by a programmable logic device (programmable logic device, PLD), for example, a field programmable gate array (field programmable gate array, FPGA). The field programmable gate array may include a large quantity of logic gate circuits, and a connection relationship between the logic gate circuits is configured based on a configuration file, to implement the functions of some or all of the units. All units of the foregoing apparatus may be implemented in the form of software invoked by the processor; or all units may be implemented in the form of hardware circuit; or some units may be implemented in the form of software invoked by the processor, and the remaining part may be implemented in the form of the hardware circuit.

In embodiments of this application, the processor is a circuit with a signal processing capability. In an implementation, the processor may be a circuit with an instruction reading and running capability, for example, a central processing unit, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads an instruction to implement functions of some or all of the foregoing units. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

No matter whether these function modules are subdivided or combined, a general process performed by the apparatus 60 in a process of implementing the method is the same. For example, the receiving unit 603 and the sending unit 602 in the apparatus 60 may also be combined into a communication unit. Usually, each unit corresponds to respective program code (or program instructions). When the program code corresponding to the unit is run on a processor, the unit executes a corresponding process to implement a corresponding function. It should be noted that for implementations of the following units, refer to corresponding descriptions in the embodiment shown in FIG. 2 or FIG. 5.

In a possible implementation, the control apparatus 60 may be the vehicle-mounted terminal in the embodiment shown in FIG. 2 or FIG. 5, or a module in the vehicle-mounted terminal, for example, a chip or an integrated circuit. The vehicle-mounted terminal is located in a vehicle including a plurality of lighting devices, and the plurality of lighting devices are disposed at different positions of the vehicle. The apparatus includes the processing unit 601, and the units are described as follows.

The processing unit 601 is configured to: determine a plurality of lighting device groups, where each of the plurality of lighting device groups includes one or more of the plurality of lighting devices, and different lighting device groups in the plurality of lighting device groups include different lighting devices; and control, based on light turn-on strategy information of the plurality of lighting device groups, the plurality of lighting device groups to emit light, where the light turn-on strategy information of the plurality of lighting device groups is used to determine a first position of a to-be-detected object.

Optionally, when determining the plurality of lighting device groups, the processing unit 601 is configured to determine a first lighting device group in the plurality of lighting device groups, where there is a position offset between the first lighting device group and a lighting device group other than the first lighting device group in the plurality of lighting device groups.

Optionally, the processing unit 601 is further configured to determine, based on a second position of the to-be-detected object, an area in which the to-be-detected object is located. The area in which the to-be-detected object is located is a left area of the vehicle, and each of the plurality of lighting device groups includes a lighting device disposed in the left area of the vehicle; or the area in which the to-be-detected object is located is a right area of the vehicle, and each of the plurality of lighting device groups includes a lighting device disposed in the right area of the vehicle; or the area in which the to-be-detected object is located includes the left area of the vehicle and the right area of the vehicle, and each of the plurality of lighting device groups includes a lighting device disposed in the left area of the vehicle and/or a lighting device disposed in the right area of the vehicle.

Optionally, when determining the first lighting device group in the plurality of lighting device groups, the processing unit 601 is configured to determine the first lighting device group based on the second position of the to-be-detected object.

Optionally, the vehicle is further provided with a visual sensor, and the processing unit 601 is further configured to: obtain a plurality of images from the visual sensor when controlling each of the plurality of lighting device groups to emit light, where each of the plurality of images includes a lighting device group that is in the plurality of lighting device groups and that is in a light emitting state and the to-be-detected object; and determine the first position of the to-be-detected object based on the plurality of images and a position, in the vehicle, of the lighting device group that is included in each of the plurality of images and that is in the light emitting state.

In still another possible implementation, the control apparatus 60 may be the vehicle-mounted terminal in the embodiment shown in FIG. 2 or FIG. 5, or a module in the vehicle-mounted terminal, for example, a chip or an integrated circuit. The vehicle-mounted terminal is located in a vehicle including a plurality of lighting devices, and the plurality of lighting devices are disposed at different positions of the vehicle. The apparatus includes the processing unit 601 and the receiving unit 603, and the units are described as follows.

The receiving unit 603 is configured to receive first information from a terminal device, where the first information indicates to turn on a first lighting device group, a distance between the first lighting device group and a to-be-detected object in the vehicle is less than or equal to a preset distance, and the to-be-detected object is at a first position. The processing unit 601 is configured to: in response to the first information, control the first lighting device group to emit light. The receiving unit 603 is further configured to receive second information from the terminal device, where the second information indicates to turn on a second lighting device group, the to-be-detected object moves from the first position to a second position, and a distance between the second lighting device group and the to-be-detected object is less than or equal to the preset distance. The processing unit 601 is further configured to: in response to the second information, control the second lighting device group to emit light.

Optionally, the vehicle is further provided with a visual sensor, and the apparatus further includes the sending unit 602. The sending unit 602 is configured to send third information to the terminal device. The third information includes a first image from the visual sensor, and the first image includes the to-be-detected object and a first lighting device group; or the third information indicates a first recommendation list, and the first recommendation list includes a first lighting device group.

Optionally, when sending the third information to the terminal device, the sending unit 602 is configured to send the third information to the terminal device when detecting at least one of shutting down of an engine of the vehicle, powering off of the entire vehicle, locking of a vehicle door, and turning off of an air conditioner.

Optionally, the sending unit 602 is further configured to send fourth information to the terminal device. The fourth information includes a second image from the visual sensor, and the second image includes the to-be-detected object and the second lighting device group; or the fourth information indicates a second recommendation list, and the second recommendation list includes a second lighting device group.

FIG. 7 is a diagram of a structure of a vehicle 70 according to an embodiment of this application. The vehicle 70 including a plurality of lighting devices may include a vehicle-mounted terminal 701.

For example, the vehicle-mounted terminal 701 is configured to: figured to: determine a plurality of lighting device groups, where each of the plurality of lighting device groups includes one or more of the plurality of lighting devices, and different lighting device groups in the plurality of lighting device groups include different lighting devices; and control, based on light turn-on strategy information of the plurality of lighting device groups, the plurality of lighting device groups to emit light, where the light turn-on strategy information of the plurality of lighting device groups is used to determine a first position of a to-be-detected object.

Optionally, when determining the plurality of lighting device groups, the vehicle-mounted terminal 701 is configured to determine a first lighting device group in the plurality of lighting device groups, where there is a position offset between the first lighting device group and a lighting device group other than the first lighting device group in the plurality of lighting device groups.

Optionally, the vehicle-mounted terminal 701 is further configured to determine, based on a second position of the to-be-detected object, an area in which the to-be-detected object is located. The area in which the to-be-detected object is located is a left area of the vehicle, and each of the plurality of lighting device groups includes a lighting device disposed in the left area of the vehicle; or the area in which the to-be-detected object is located is a right area of the vehicle, and each of the plurality of lighting device groups includes a lighting device disposed in the right area of the vehicle; or the area in which the to-be-detected object is located includes the left area of the vehicle and the right area of the vehicle, and each of the plurality of lighting device groups includes a lighting device disposed in the left area of the vehicle and/or a lighting device disposed in the right area of the vehicle.

Optionally, when determining the first lighting device group in the plurality of lighting device groups, the vehicle-mounted terminal 701 is configured to determine the first lighting device group based on the second position of the to-be-detected object.

Optionally, the vehicle 70 is further provided with a visual sensor 702, and the vehicle-mounted terminal 701 is further configured to: obtain a plurality of images from the visual sensor when controlling each of the plurality of lighting device groups to emit light, where each of the plurality of images includes a lighting device group that is in the plurality of lighting device groups and that is in a light emitting state and the to-be-detected object; and determine the first position of the to-be-detected object based on the plurality of images and a position, in the vehicle, of the lighting device group that is included in each of the plurality of images and that is in the light emitting state.

For another example, the vehicle-mounted terminal 701 is configured to receive first information from a terminal device, where the first information indicates to turn on a first lighting device group, a distance between the first lighting device group and a to-be-detected object in the vehicle is less than or equal to a preset distance, and the to-be-detected object is at a first position; in response to the first information, control the first lighting device group to emit light; receive second information from the terminal device, where the second information indicates to turn on a second lighting device group, the to-be-detected object moves from the first position to a second position, and a distance between the second lighting device group and the to-be-detected object is less than or equal to the preset distance; and in response to the second information, control the second lighting device group to emit light.

Optionally, the vehicle is further provided with a visual sensor 702, and the vehicle-mounted terminal 701 is further configured to send third information to the terminal device. The third information includes a first image from the visual sensor, and the first image includes the to-be-detected object and a first lighting device group; or the third information indicates a first recommendation list, and the first recommendation list includes a first lighting device group.

Optionally, when sending the third information to the terminal device, the vehicle-mounted terminal 701 is configured to send the third information to the terminal device when detecting at least one of shutting down of an engine of the vehicle, powering off of the entire vehicle, locking of a vehicle door, and turning off of an air conditioner.

Optionally, the vehicle-mounted terminal 701 is further configured to send fourth information to the terminal device. The fourth information includes a second image from the visual sensor, and the second image includes the to-be-detected object and a second lighting device group; or the fourth information indicates a second recommendation list, and the second recommendation list includes a second lighting device group.

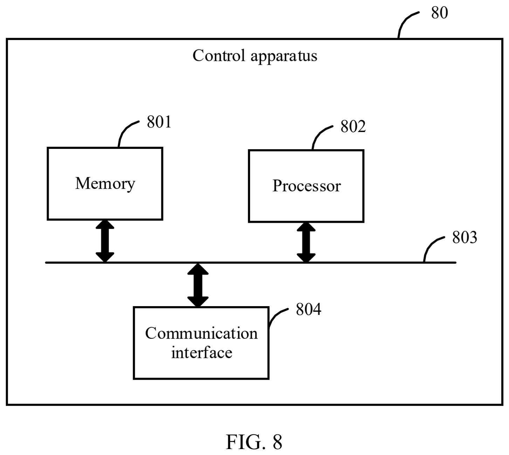

FIG. 8 is a diagram of a structure of a control apparatus 80 according to an embodiment of this application. The apparatus 80 may include at least one memory 801 and at least one processor 802. Optionally, a bus 803 may be further included. Further, optionally, the apparatus may further include a communication interface 804, where the memory 801, the processor 802, and the communication interface 804 are connected through the bus 803.

The memory 801 is configured to provide storage space, and the storage space may store data such as an operating system and a computer program. The memory 801 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The processor 802 is a module that performs an arithmetic operation and/or a logical operation, and may be specifically one or a combination of a plurality of processing modules such as a CPU, a GPU, a microprocessor unit (microprocessor unit, MPU), an ASIC, an FPGA, and a complex programmable logic device (Complex programmable logic device, CPLD).

The communication interface 804 is configured to receive data sent by an external device and/or send data to an external device, and may be a wired link interface including, for example, an Ethernet cable, or may be a wireless (for example, Wi-Fi, Bluetooth, or general wireless transmission) link interface. Optionally, the communication interface 804 may further include a transmitter (for example, a radio frequency transmitter or an antenna), a receiver, or the like that is coupled to the interface.

The processor 802 in the apparatus 80 is configured to read the computer program stored in the memory 801, and is configured to perform the foregoing control method, for example, the control method described in any embodiment in FIG. 2 or FIG. 5.

In some possible implementations, the control apparatus 80 may be the vehicle-mounted terminal in the embodiment shown in FIG. 2 or FIG. 5, or a module in the vehicle-mounted terminal, for example, a chip or an integrated circuit.

For example, the processor 802 in the apparatus 80 is configured to read a computer program stored in the memory 801, to perform the following operations: determining a plurality of lighting device groups, where each of the plurality of lighting device groups includes one or more of the plurality of lighting devices, and different lighting device groups in the plurality of lighting device groups include different lighting devices; and controlling, based on light turn-on strategy information of the plurality of lighting device groups, the plurality of lighting device groups to emit light, where the light turn-on strategy information of the plurality of lighting device groups is used to determine a first position of a to-be-detected object.

Optionally, when determining the plurality of lighting device groups, the processor 802 is specifically configured to perform the following operations: determining a first lighting device group in the plurality of lighting device groups, where there is a position offset between the first lighting device group and a lighting device group other than the first lighting device group in the plurality of lighting device groups.

Optionally, the processor 802 is further configured to perform the following operations: determining, based on a second position of the to-be-detected object, an area in which the to-be-detected object is located. The area in which the to-be-detected object is located is a left area of the vehicle, and each of the plurality of lighting device groups includes a lighting device disposed in the left area of the vehicle; or the area in which the to-be-detected object is located is a right area of the vehicle, and each of the plurality of lighting device groups includes a lighting device disposed in the right area of the vehicle; or the area in which the to-be-detected object is located includes the left area of the vehicle and the right area of the vehicle, and each of the plurality of lighting device groups includes a lighting device disposed in the left area of the vehicle and/or a lighting device disposed in the right area of the vehicle.

Optionally, when determining the first lighting device group in the plurality of lighting device groups, the processor 802 is specifically configured to perform the following operation: determining the first lighting device group based on the second position of the to-be-detected object.

Optionally, the vehicle is further provided with a visual sensor, and the processor 802 is further configured to perform the following operations: obtaining a plurality of images from the visual sensor when controlling each of the plurality of lighting device groups to emit light, where each of the plurality of images includes a lighting device group that is in the plurality of lighting device groups and that is in a light emitting state and the to-be-detected object; and determining the first position of the to-be-detected object based on the plurality of images and a position, in the vehicle, of the lighting device group that is included in each of the plurality of images and that is in the light emitting state.

For another example, the processor 802 in the apparatus 80 is configured to read a computer program stored in the memory 801, to perform the following operations: receiving first information from a terminal device through the communication interface 804, where the first information indicates to turn on a first lighting device group, a distance between the first lighting device group and a to-be-detected object in the vehicle is less than or equal to a preset distance, and the to-be-detected object is at a first position; in response to the first information, controlling the first lighting device group to emit light; receiving second information from the terminal device through the communication interface 804, where the second information indicates to turn on a second lighting device group, the to-be-detected object moves from the first position to a second position, and a distance between the second lighting device group and the to-be-detected object is less than or equal to the preset distance; and in response to the second information, controlling the second lighting device group to emit light.

Optionally, the vehicle is further provided with a visual sensor, and the processor 802 is further configured to perform the following operation: sending third information to the terminal device through the communication interface 804. The third information includes a first image from the visual sensor, and the first image includes the to-be-detected object and a first lighting device group; or the third information indicates a first recommendation list, and the first recommendation list includes a first lighting device group.

Optionally, when sending the third information to the terminal device, the processor 802 is specifically configured to perform the following operation: sending the third information to the terminal device when detecting at least one of shutting down of an engine of the vehicle, powering off of the entire vehicle, locking of a vehicle door, and turning off of an air conditioner.

Optionally, the processor 802 is further configured to perform the following operation: sending fourth information to the terminal device through the communication interface 804. The fourth information includes a second image from the visual sensor, and the second image includes the to-be-detected object and a second lighting device group; or the fourth information indicates a second recommendation list, and the second recommendation list includes a second lighting device group.

An embodiment of this application provides a computer-readable storage medium. The computer-readable storage medium stores computer instructions. When the computer instructions are executed, a computer is enabled to perform the method in any one of the implementations shown in FIG. 2 or FIG. 5.

An embodiment of this application provides a computer program product. The computer program product includes computer program code. When the computer program code is run by a computer, the computer is enabled to perform the method in any one of the implementations in the embodiment shown in FIG. 2 or FIG. 5.

When the computer instructions are loaded and executed on the computer, all or some of the process or functions according to embodiments of this application can be implemented. The computer may be a general-purpose computer, a dedicated computer, a computer network, or another programmable apparatus. The computer instructions may be stored in a computer-readable storage medium, or may be transmitted by using a computer-readable storage medium. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Sequence adjustment, combination, or deletion may be performed on the steps in the method embodiments of this application based on an actual requirement.

Modules in the apparatus embodiments of this application may be combined, divided, or deleted based on an actual requirement.

The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in the embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "have", and their variants all mean "include but are not limited to", unless otherwise specifically emphasized in another manner.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, or improvement made based on the technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

**Claims**

1. A control method, applied to a vehicle comprising a plurality of lighting devices, wherein the plurality of lighting devices are disposed at different positions of the vehicle, and the method comprises:

   determining a plurality of lighting device groups, wherein each of the plurality of lighting device groups comprises one or more of the plurality of lighting devices, and different lighting device groups in the plurality of lighting device groups comprise different lighting devices; and
   controlling, based on light turn-on strategy information of the plurality of lighting device groups, the plurality of lighting device groups to emit light, wherein the light turn-on strategy information of the plurality of lighting device groups is used to determine a first position of a to-be-detected object.

2. The method according to claim 1, wherein the determining the plurality of lighting device groups comprises:

   determining a first lighting device group in the plurality of lighting device groups, wherein
   there is a position offset between the first lighting device group and a lighting device group other than the first lighting device group in the plurality of lighting device groups.

3. The method according to claim 1 or 2, wherein the plurality of lighting device groups comprise the first lighting device group, a second lighting device group, and a third lighting device group, and a position offset between the first lighting device group and the second lighting device group is the same as a position offset between the second lighting device group and the third lighting device group.

4. The method according to any one of claims 1 to 3, wherein

   the light turn-on strategy information of the plurality of lighting device groups comprises an ascending order of a plurality of position offsets; or
   the light turn-on strategy information of the plurality of lighting device groups comprises a descending order of the plurality of position offsets, wherein
   the plurality of position offsets comprise a position offset of each of the plurality of lighting device groups relative to the first lighting device group.

5. The method according to any one of claims 1 to 4, wherein there is a spacing between different lighting devices comprised in a same lighting device group in the plurality of lighting device groups.

6. The method according to any one of claims 1 to 5, wherein the method further comprises:

   determining, based on a second position of the to-be-detected object, an area in which the to-be-detected object is located, wherein
   the area in which the to-be-detected object is located is a left area of the vehicle, and each of the plurality of lighting device groups comprises a lighting device disposed in the left area of the vehicle; or
   the area in which the to-be-detected object is located is a right area of the vehicle, and each of the plurality of lighting device groups comprises a lighting device disposed in the right area of the vehicle; or
   the area in which the to-be-detected object is located comprises the left area of the vehicle and the right area of the vehicle, and each of the plurality of lighting device groups comprises a lighting device disposed in the left area of the vehicle and/or a lighting device disposed in the right area of the vehicle.

7. The method according to claim 2, wherein the determining the first lighting device group in the plurality of lighting device groups comprises:
   determining the first lighting device group based on a second position of the to-be-detected object.

8. The method according to claim 7, wherein a distance between a position of the first lighting device group in the vehicle and the second position of the to-be-detected object is less than or equal to a preset distance.

9. A control method, applied to a vehicle comprising a plurality of lighting devices, wherein the plurality of lighting devices are disposed at different positions of the vehicle, and the method comprises:

   receiving first information from a terminal device, wherein the first information indicates to turn on a first lighting device group, a distance between the first lighting device group and a to-be-detected object in the vehicle is less than or equal to a preset distance, and the to-be-detected object is at a first position;
   in response to the first information, controlling the first lighting device group to emit light;
   receiving second information from the terminal device, wherein the second information indicates to turn on a second lighting device group, the to-be-detected object moves from the first position to a second position, and a distance between the second lighting device group and the to-be-detected object is less than or equal to the preset distance; and
   in response to the second information, controlling the second lighting device group to emit light.

10. The method according to claim 9, wherein the vehicle is further provided with a visual sensor, and the method further comprises:

    sending third information to the terminal device, wherein
    the third information comprises a first image from the visual sensor, and the first image comprises the to-be-detected object and the first lighting device group; or
    the third information indicates a first recommendation list, and the first recommendation list comprises the first lighting device group.

11. The method according to claim 10, wherein the sending the third indication information to the terminal device comprises:
    sending the third information to the terminal device when at least one of shutting down of an engine of the vehicle, powering off of the entire vehicle, locking of a vehicle door, and turning off of an air conditioner is detected.

12. The method according to any one of claims 9 to 11, wherein the method further comprises:

    sending fourth information to the terminal device, wherein
    the fourth information comprises a second image from the visual sensor, and the second image comprises the to-be-detected object and the second lighting device group; or
    the fourth information indicates a second recommendation list, and the second recommendation list comprises the second lighting device group.

13. A control apparatus, comprising a unit or a module configured to implement the method according to any one of claims 1 to 12.

14. A control apparatus, wherein the control apparatus comprises at least one processor, and the at least one processor is configured to perform the method according to any one of claims 1 to 12.

15. A vehicle, comprising the control apparatus according to claim 13 or 14.

16. A vehicle-mounted terminal, wherein the vehicle-mounted terminal is configured to implement the method according to any one of claims 1 to 12.

17. A computer-readable storage medium, wherein the computer-readable storage medium stores computer instructions, and when the computer instructions are executed, the computer is enabled to perform the method according to any one of claims 1 to 12.

18. A computer program product, wherein the computer program product comprises computer program code, and when the computer program code is run by a computer, the computer is enabled to perform the method according to any one of claims 1 to 12.

FIG. 1

Determine a plurality of lighting device groups, where each of the plurality of lighting device groups includes one or more of a plurality of lighting devices, and different lighting device groups in the plurality of lighting device groups include different lighting devices — 201

Control, based on light turn-on strategy information of the plurality of lighting device groups, the plurality of lighting device groups to emit light, where the light turn-on strategy information of the plurality of lighting device groups is used to determine a first position of a to-be-detected object — 202

FIG. 2

Second position of a to-be-detected object

● First lighting device group

FIG. 3

FIG. 4

Vehicle-mounted terminal

Terminal device

501: Send first information, where the first information indicates to turn on a first lighting device group, a distance between the first lighting device group and a to-be-detected object in a vehicle is less than or equal to a preset distance, and the to-be-detected object is at a first position

502: In response to the first information, control the first lighting device group to emit light

503: Send second information, where the second information indicates to turn on a second lighting device group, the to-be-detected object moves from the first position to a second position, and a distance between the second lighting device group and the to-be-detected object is less than or equal to the preset distance

504: In response to the second information, control the second lighting device group to emit light

FIG. 5

60

Control apparatus

601

602

603

Processing unit

Sending unit

Receiving unit

FIG. 6

70

Vehicle

701

702

Vehicle-mounted terminal

Visual sensor

FIG. 7

FIG. 8

## INTERNATIONAL SEARCH REPORT

| International application No. |
| --- |
| **PCT/CN2023/121488** |

| A. | CLASSIFICATION OF SUBJECT MATTER |
| --- | --- |

H05B47/155(2020.01)i; B60Q3/80(2017.01)i

According to International Patent Classification (IPC) or to both national classification and IPC

| B. | FIELDS SEARCHED |
| --- | --- |

Minimum documentation searched (classification system followed by classification symbols)

IPC: H05B B60Q

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI: 灯, 车辆, 位置, 组, 控制, 检测, 距离, 阈值, light, vehicle, position, group, control+, detect+, monitor+, distance, threshold

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114590196 A (SHENZHEN HERUI SOFTWARE CO., LTD.) 07 June 2022 (2022-06-07) description, paragraphs [0066]-[0158] | 9-18 |
| A | CN 115366788 A (GREAT WALL MOTOR CO., LTD.) 22 November 2022 (2022-11-22) entire document | 1-18 |
| A | CN 115866848 A (ZHEJIANG ZEEKR INTELLIGENT TECHNOLOGY CO., LTD. et al.) 28 March 2023 (2023-03-28) entire document | 1-18 |
| A | WO 2022251990 A1 (HUAWEI TECHNOLOGIES CO., LTD.) 08 December 2022 (2022-12-08) entire document | 1-18 |
| A | US 2018170253 A1 (HYUNDAI MOTOR CO., LTD. et al.) 21 June 2018 (2018-06-21) entire document | 1-18 |
| A | US 2021188165 A1 (BOMBARDIER INC.) 24 June 2021 (2021-06-24) entire document | 1-18 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 June 2024** | **10 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/121488**

| Patent document cited in search report | | | Publication date (day/month/year) | Patent family member(s) | | | Publication date (day/month/year) |
|---|---|---|---|---|---|---|---|
| CN | 114590196 | A | 07 June 2022 | None | | | |
| CN | 115366788 | A | 22 November 2022 | None | | | |
| CN | 115866848 | A | 28 March 2023 | None | | | |
| WO | 2022251990 | A1 | 08 December 2022 | None | | | |
| US | 2018170253 | A1 | 21 June 2018 | US | 10071685 | B2 | 11 September 2018 |
| US | 2021188165 | A1 | 24 June 2021 | None | | | |

Form PCT/ISA/210 (patent family annex) (July 2022)